(19) Europäisches Patentamt
European Patent Office
Office européen des brevets

(11) Veröffentlichungsnummer: **0 255 069 B1**

(12) # EUROPÄISCHE PATENTSCHRIFT

(45) Veröffentlichungstag der Patentschrift:
30.01.91 Patentblatt 91/05

(51) Int. Cl.⁵: **H04L 12/28**, H04L 12/26

(21) Anmeldenummer: 87110782.7

(22) Anmeldetag: 24.07.87

(54) Schaltungsanordnung zur seriellen Datenübertragung.

(30) Priorität: 29.07.86 DE 3625613

(43) Veröffentlichungstag der Anmeldung:
03.02.88 Patentblatt 88/05

(45) Bekanntmachung des Hinweises auf die
Patenterteilung:
30.01.91 Patentblatt 91/05

(84) Benannte Vertragsstaaten:
AT BE CH DE ES FR GB GR IT LI NL SE

(56) Entgegenhaltungen:
EP-A- 0 096 097

(56) Entgegenhaltungen:
PATENT ABSTRACTS OF JAPAN, Band 9, Nr.
208 (E-338)[1931], 24. August 1985; & JP-A-60
72 350 (HITACHI ENGINEERING K.K.)
24-04-1985

(73) Patentinhaber: Siemens Aktiengesellschaft
Wittelsbacherplatz 2
D-8000 München 2 (DE)

(72) Erfinder: Weimert, Günter, Dipl.-Ing.
Geisenbrunnerstrasse 64
D-8000 München 71 (DE)
Erfinder: Narjes, Ferdinand, Ing. grad.
Tölzerstrasse 41
D-8000 München 70 (DE)

**Beschreibung**

Die Erfindung bezieht sich auf eine wie im Oberbegriff des Patentanspruchs 1 angegebene Schaltungsanordnung zur seriellen Datenübertragung.

Eine derartige Schaltungsanordnung ist bereits aus der DE-OS 34 33 150 bekannt. Die bekannte Schaltungsanordnung enthält eine Ansteuerschaltung mit zwei in Serie zueinander geschalteten Optokopplern. Ein Ansteuerbaustein für die Optokoppler weist eine Kontrollschaltung auf, die bei Auftreten eines statischen Fehlersignals über eine Zeitschaltung eine Sperrung der Verbindung zwischen dem Eingang und den Optokopplern verursacht. Auf diese Weise wird vermieden, daß die Datenübertragungsleitung im Falle eines statischen Fehlersignals für alle Teilnehmer blockiert wird.

Da bei einer derartigen Schaltungsanordnung Teilnehmerschaltungen parallel an den Bus angeschlossen sind, steigt die Ausfallwahrscheinlichkeit einer Kontrollschaltung proportional mit der Anzahl der an den Bus angeschlossenen Teilnehmerschaltungen. Es kann daher bei Schaltungsanordnungen mit einer vergleichsweise großen Zahl von Teilnehmerschaltungen der Fall eintreten, daß bei besonders hohen Anforderungen an die Verfügbarkeit der Schaltungsanordnungen die gestellten Forderungen durch die bekannten Maßnahmen nicht zu erfüllen sind.

Aufgabe der Erfindung ist es daher, eine Schaltungsanordnung der eingangs genannten Art derart auszubilden, daß sie selbst bei einer vergleichsweise großen Zahl von Teilnehmerstellen eine möglichst hohe Verfügbarkeit aufweist.

Insbesondere soll eine Möglichkeit zur Ortung gestörter Teilnehmerstellen bestehen.

Gemäß der Erfindung wird die Schaltungsanordnung zur seriellen Datenübertragung in der im kennzeichnenden Teil des Patentanspruchs 1 angegebenen Weise ausgebildet. Durch diese Maßnahmen ergibt sich der Vorteil, daß die Schaltungsanordnung zur seriellen Datenübertragung sowohl hinsichtlich statischer Fehlersignale von Teilnehmerschaltungen als auch gegen das Datenübertragungsnetz blockierende Fehler von Kontrollschaltungen wirksam geschützt ist.

Aus der DE-OS 34 36 441 ist bereits eine Datenübermittlungseinrichtung zur seriellen Datenübertragung bekannt, die ein Datennetz in Baumstruktur aufweist. Dabei sind die Stationen in mehreren Netzebenen angeordnet. In den Netzknoten befinden sich Signalsammler, die Signale sammeln und weitergeben. Da die Signalsammler keine Verbindung zwischen mehreren Bussystemen herstellen, kann das Datenübertragungsnetz nicht durch statische Fehlersignale blockiert werden. Allerdings sind dabei in den Netzknoten Mikroprozessoren oder dergleichen erforderlich.

Bei der erfindungsgemäßen Schaltungsanordnung können statische Fehlersignale dadurch festgestellt werden, daß die auszusendenden Daten einer Zeitschaltung zugeführt werden, die nur auf statische, d.h. über einen längeren Zeitraum anliegende Signale anspricht, nicht jedoch auf die Übertragungssignale mit vergleichsweise schnell aufeinanderfolgenden Zustandsänderungen.

Bei einer Weiterbildung der Erfindung gemäß Anspruch 2 wird für den Fall, daß die Teilnehmerschaltungen Impulsfolgen mit vorgegebener maximaler Dauer aussenden, die Kontrollschaltung derart ausgebildet, daß sie auf ein Überschreiten der vorgegebenen maximalen Dauer anspricht. Dabei kann es zweckmäßig sein, die Impulsfolge, insbesondere mit Hilfe eines retriggerbaren Monoflops, in ein Dauersignal umzuwandeln und das Dauersignal mittels der Kontrollschaltung zu überwachen. Besonders vorteilhaft sind die Maßnahmen nach Anspruch 2 dann, wenn der Bus zusätzlich zu einem Datenbus einen Steuerbus aufweist, so daß die Kontrollschaltung nur den Logikpegel an einem Steuerausgang der Teilnehmerschaltung bzw. am Steuerbus auszuwerten braucht, um die vorgegebene maximale Dauer der Impulsfolge zu überwachen.

Die Maßnahmen nach Anspruch 3 haben den Vorteil, daß ein einmal aufgetretenes statisches Fehlersignal eine bleibende Zwangsabschaltung auslöst. Die betreffende Teilnehmerschaltung bzw. Gruppe von Teilnehmerschaltungen antwortet nicht mehr. Eine fehlende Antwort kann als Kriterium zur Ortung gestörter Teilnehmerstellen dienen. Für den unwahrscheinlicheren Fall, daß eine einer Koppelvorrichtung zu-geordnete Kontrollschaltung selbst gestört ist, läßt sich in der Zentralstation feststellen, welcher Gruppe von Teilnehmerschaltungen die Teilnehmerschaltung angehört, deren Kontrollschaltung defekt ist.

Die gewünschte zwangsweise Freischaltung des Busses bzw. des Datenübertragungsnetzes wird zweckmäßigerweise mittels der in Anspruch 4 angegebenen Maßnahmen vorgenommen.

Die Maßnahmen nach Anspruch 5 sind mit einer weiteren Erleichterung der Fehlerortung verbunden. Besonders vorteilhaft sind diese Maßnahmen dann, wenn die Gruppen von Teilnehmerschaltungen, die jeweils an einen gemeinsamen Datenbus angeschlossen sind, an ein und demselben Ort, insbesondere räumlich benachbart, angeordnet sind.

Die Maßnahmen nach Anspruch 6 haben den Vorteil, daß die Selbsthaltung der Zeitschaltung dadurch beendet wird, daß das Gerät, das die sich selbst haltende Zeitschaltung enthält, aus einer Aufnahmevorrichtung herausgezogen wird. Sind die Teilnehmerschaltung und die Kontrollschaltung bzw. die Koppelvorrichtung und die Kontrollschaltung in ein und demselben Gerät untergebracht, das wegen der im Fehlerfall erforderlichen Reparatur ohnehin der Aufnahmevorrichtung entnommen werden muß, so ergibt sich auf diese Weise die gewünschte Beendigung der Selbsthaltung von selbst.

Die Selbsthaltung der Zeitschaltung wird zweckmäßigerweise durch die im Anspruch 7 angegebenen Maßnahmen erzielt.

Durch die Maßnahmen nach Anspruch 8 wird mit einfach realisierbaren Mitteln erreicht, daß im Falle einer unzulässig langen Belegung des Busses die betreffende Teilnehmerschaltung den Datenbus bzw. die betreffende Koppelvorrichtung das Datenübertragungsnetz nicht beeinflussen kann.

Zweckmäßige weitere Ausgestaltungen der Erfindung ergeben sich aus den Ansprüchen 9 und 10.

Die Erfindung wird anhand der in den Figuren dargestellten Ausführungsbeispiele näher erläutert.

Fig. 1 zeigt eine Schaltungsanordnung zur seriellen Datenübertragung, bei der mehrere Bussysteme zu einem Datenübertragungsnetz gekoppelt sind. Ferner zeigen für die in Fig. 1 dargestellte Schaltungsanordnung

Fig. 2 eine Schnittstellenanordnung mit Kontrollschaltung und

Fig. 3 eine Koppelvorrichtung mit Kontrollschaltung.

Die Schaltungsanordnung umfaßt die Stationen 1 bis m die räumlich voneinander getrennt angeordnet sind. Durch den Anschluß eines Prozessors 51...5m an eine Koppelvorrichtung 41...4m wird die Station 1...m zur Zentralstation. Alle Stationen 1...m sind mit ein oder zwei Datenanschlußgeräten bzw. Modems 61a...6ma versehen, die über die Verbindungsleitungen 6a...6d zu einem Datenübertragungsnetz miteinander verbunden sind. Die Stationen 1...m tauschen über das Datenübertragungsnetz Informationen aus.

Die Teilnehmerstellen 111...1mn enthalten jeweils eine Teilnehmerschaltung 311...3mn und eine Schnittstellenanordnung 211...2mn.

Die Teilnehmerschaltungen 311 ... 31n der Station 1 sind über die Schnittstellenanordnungen 211 ... 21n an den Datenbus 101 angeschlossen. In der Station 2 befinden sich die Teilnehmerschaltungen 321 ... 32n. Diese Teilnehmerschaltungen sind über die Schnittstellenanordnungen 221 ... 22n an den Datenbus 102 angeschlossen. Von den weiteren Stationen 2...m ist lediglich die Station m dargestellt. Diese enthält die Teilnehmerschaltungen 3ml ... 3mn, die über die Schnittstellenanordnungen 2ml ... 2mn an den Datenbus 10m angeschlossen sind.

Die Teilnehmerschaltungen 311 ... 3mn sind insbesondere mikroprozessorgesteuerte Geräte, die nach Aufruf durch einen der Prozessoren 51...5m Daten senden können. Ggfs. ist nur ein Teil der Stationen 1...m mit einem Prozessor 51... 5m versehen. Die Prozessoren werden so gesteuert, daß sie nur dann senden, wenn das Datenübertragungsnetz nicht belegt ist.

In der Station 1 befindet sich die Koppelvorrichtung 41, mit deren Hilfe der örtliche Bus 101, der Prozessor 51 und die Datenanschlußgeräte bzw. Modems 61a, 61 b miteinander koppelbar sind. In der Station 2 befindet sich die Koppelvorrichtung 42, die zur Koppelung des örtlichen Busses 102 mit den Datenanschlußgeräten bzw. Modems 62a, 62b dient. In der Station m befindet sich die Koppelvorrichtung 4m, mit deren Hilfe der örtliche Bus 10m, der Prozessor 5m und das Datenanschlußgerät bzw. Modem 6ma koppelbar sind.

Die Koppelvorrichtung 41...4m besteht aus einem Sende-/ Empfangsbaustein je Datenbus und einer an die Steuerbusse angeschlossenen Verteilerschaltung. Die Verteilerschaltung ist eine derart ausgebildete Logikschaltung, daß ein Belegungssignal, das auf einer der Steuerleitungen ankommt, den zur betreffenden Steuerleitung zugeordneten Datenbus zu allen anderen Datenbussen durchschaltet.

Auf diese Weise wird erreicht, daß die von einer der Teilnehmerstellen ausgesendete Information von allen anderen Teilnehmerstellen empfangen werden kann.

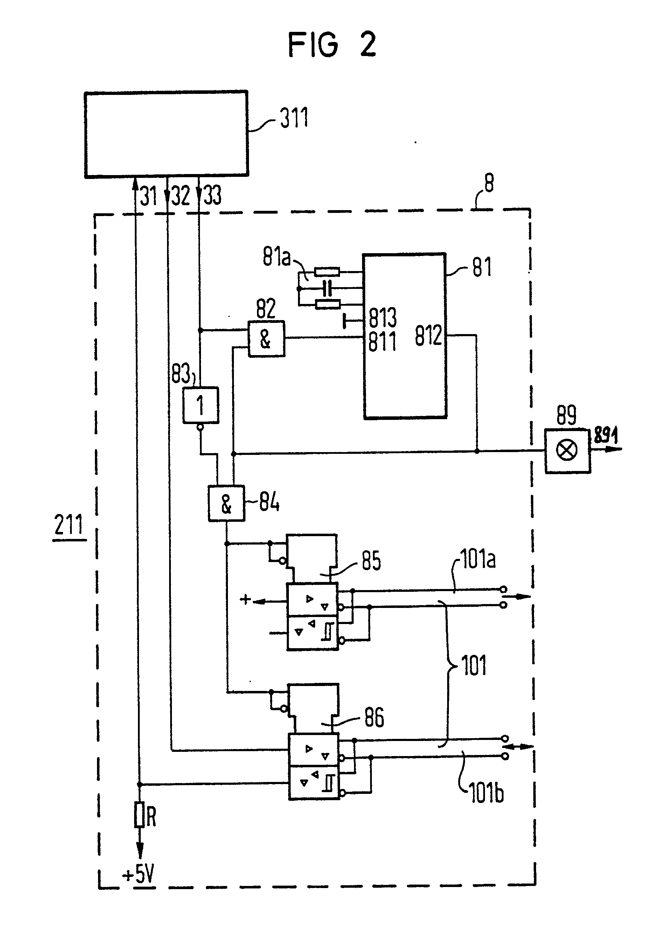

Die in Fig. 2 gezeigte Schaltungsanordnung dient zur seriellen Datenübertragung und ist Teil eines an verschiedenen Orten gelegene Bussystems, bei denen alle Datenquellen und Datensender parallel an eine gemeinsame Busleitung bzw. an einen gemeinsamen Bus 101...10m angeschlossen sind. Die Busse haben insbesondere die Schnittstelle RS 485.

Im Ruhezustand sind die Ausgänge aller Schnittstellenanordnungen 211...2mn auf hochohmig geschaltet.

Die an verschiedenen Orten gelegenen bzw. verschiedenen Stationen 1...m angehörenden Bussysteme 101...10m sind über die Koppelvorrichtungen 41...4m und digitalen Datenanschlußgeräten 61a...6ma ersatzweise bei verzögerten Sendebeginn der Daten und über Modems zu einem Datenverbund zusammengeschlossen.

Zur geordneten Übertragung der Daten zwischen den verschiedenen Teilnehmerschaltungen 311..3mn wird vorzugsweise ein sogenanntes Aufrufverfahren verwendet. Dabei wird durch einen Prozessor jeweils nur eine Teilnehmerschaltung aufgerufen, die dann ihre Daten sendet. Nach Aussenden der Daten wird der Ausgang der Schnittstellenanordnung der aufgerufenen Teilnehmerschaltung wieder hochohmig geschaltet.

Eine andere Möglichkeit einer geordneten Übertragung besteht z.B. darin, daß die Teilnehmerschaltungen synchronisiert und zur zeitlich gestaffelten Abgabe von Meldungen veranlaßt werden, z.B. mit Hilfe von in den Teilnehmerschaltungen vorgesehenen Zählern, die auf verschiedene Staffelzeiten eingestellt sind.

Tritt durch eine defekte Teilnehmerschaltung der Fall ein, daß diese ständig sendet, so wird die Teilnehmerschaltung nach Ablauf einer vorgegebenen Wartezeit an einer weiteren Belegung des Busses 101...10m gehindert.

In jeder Schnittstellenanordnung 211...2mn wird bei jedem Aufruf die Dauer der Datenaussendung der zugehörigen Teilnehmerschaltung überwacht. Überschreitet die Dauer der auf einen Aufruf folgenden Datenaussendung eine vorbestimmte Wartezeit $t_1$, so wird die Anschaltung der Teilnehmerschaltung an das betreffende Bussystem zwangsweise unterbrochen. Die Unterbrechung der Anschaltung kann z.B. dadurch vorgenommen werden, daß zwischen den Ausgängen der Schnittstellenanordnung und der Busleitung elektronische Schalter liegen, die beim Senden von Signalen durchgeschaltet sind. Eine derartige Schaltungsanordnung zum Anschalten einer Teilnehmerschaltung an eine Busleitung ist aus der E-A2-0 150 457 bekannt.

Finden in Schnittstellenanordnungen 211...2mn Schnittstellenbausteine Verwendung, die durch Steuersignale wahlweise aktivierbar oder in einen hochohmigen Zustand überführbar sind, so werden diese zweckmäßigerweise zusätzlich durch die zugeordnete Kontrollschaltung 8 angesteuert. Eine derartige Schaltungsanordnung geht aus Fig. 2 hervor.

Zur einfacheren Ortung der fehlerhaften Teilnehmerschaltung 311...3mn kann eine Anzeigelampe an der Baugruppe eingeschaltet und ein Alarm abgegeben werden.

Fig. 2 zeigt für eine Busleitung vom Typ RS 485 eine Schnittstellenanordnung mit Kontrollschaltung.

Die Teilnehmerschaltung 311 hat einen Dateneingang 31, einen Datenausgang 32 und einen Steuerausgang 33. Der Steuerausgang 33 ist unmittelbar an einen Eingang der UND-Schaltung 82 und über den Inverter 83 an einen Eingang der UND-Schaltung 84 geführt. Die Zeitschaltung 81 hat einen Ausgang 812, der an einen Eingang der UND-Schaltung 82, an einen Eingang der UND-Schaltung 84 und an den Eingang der Anzeigevorrichtung 89 geführt ist. Die Zeitschaltung 81 ist beispielsweise ein Zeitbaustein vom Typ CD 45 41 und enthält einen Taktgeber, dessen Taktfrequenz durch eine äußere Beschaltung 81a bestimmt ist.

Der Ausgang der UND-Schaltung 84 ist an die Steuereingänge der Schnittstellenbausteine 85 und 86 geführt, die z.B. vom Typ SN 75 176 sind. Der Ausgang des Schnittstellenbausteines 85 ist an den Steuerbus 101a, der Ausgang des Schnittstellenbausteins 86 an den Datenbus 101b des Busses 101 geführt. Der Schnittstellenbaustein 86 ist sowohl an den Dateneingang 31 als auch an den Datenausgang 32 der Teilnehmerschaltung 311 angeschlossen. Über einen hochohmigen Widerstand R ist der Dateneingang 31 an die Versorgungsspannung +5V gelegt.

Wird die Teilnehmerschaltung 311 vom Prozessor 51 aufgerufen, so gelangen die Daten vom Datenbus 101b über den Schnittstellenbaustein 86 an den Dateneingang 31 der Teilnehmerschaltung 311.

Im zurückgestellten Zustand der Zeitschaltung 81 liegt am Ausgang 812 der Zeitschaltung Logikpegel H, so daß die UND Schaltungen 82 und 84 für ein vom Steuerausgang 33 kommendes Belegungssignal geöffnet sind. Sendet die Teilnehmerschaltung 311 Daten zum Prozessor, so wird der Steuerausgang 33 aktiviert, wobei er vom Logikpegel H in L übergeht. Am Ausgang des Inverters 83 ergibt sich der Logikpegel H, der über die UND-Schaltung 84 an die Steuereingänge der Schnittstellenbaustein 85 und 86 gelegt wird. Hierdurch ergibt sich, daß der Datenausgang 32 der Teilnehmerschaltung 311 auf den Datenbus 101b geschaltet und der Steuerbus 101a aktiviert wird. Gleichzeitig wird die Zeitschaltung 81 über die UND-Schaltung 82 gestartet.

Überschreitet die Sendezeit der Teilnehmerschaltung 311 die vorgesehene Wartezeit, so geht der Logikpegel am Ausgang 812 der Zeitschaltung 81 von H auf L über und sperrt die UND-Schaltungen 82 und 84.

Durch das Sperren der UND-Schaltung 82 ergibt sich, daß die Zeitschaltung 81 über den Steuereingang 33 der Teilnehmerschaltung 311 nicht gestartet werden kann und der Ausgang 812 im Zustand L verbleibt. In diesem Zustand schaltet die UND-Schaltung 84 die symmetrischen Ausgänge der Schnittstellenbausteine 85 und 86 unabhängig vom Pegel am Steuerausgang 33 hochohmig, so daß der Steuerbus 101a und der Datenbus 101b von dem Eingang 31 und dem Ausgang 32 der Teilnehmerschaltung 311 abgetrennt sind und die Busleitungen 101 nicht durch die der Teilnehmerschaltung 311 zugeordneten Schnittstellenbaustein 85, 86 belastet werden.

Über die Anzeigevorrichtung 89 wird das Ansprechen der Kontrollschaltung 8 angezeigt und über den Anschluß 891 ein Alarm abgegeben.

Wird die Schnittstellenanordnung 211 aus ihrer Aufnahmevorrichtung herausgezogen und wieder hineingesteckt, so wird die Zeitschaltung 81 zurückgesetzt, da der Automatik-Reset-Anschluß 813 auf Massepotential liegt. Dabei nimmt der Ausgang 812 Logikpegel H an, so daß der Ursprungszustand wieder hergestellt ist.

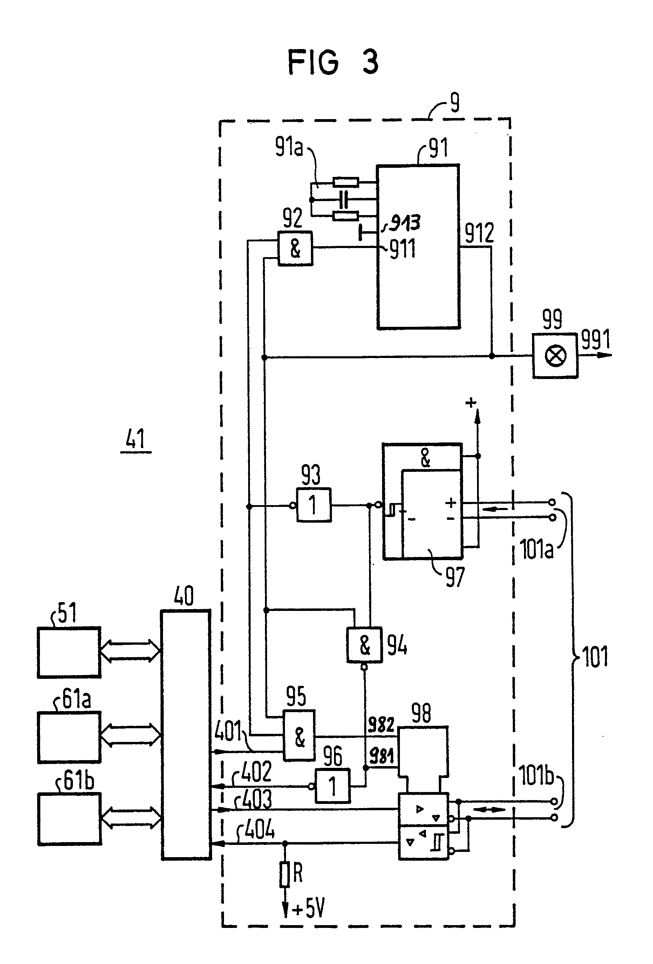

Fig. 3 zeigt eine Koppelvorrichtung mit Kontrollschaltung. Die Zeitschaltung 91 der Koppelvorrichtung 41 stimmt hinsichtlich ihers Aufbaus mit der nach Fig. 2 überein und unterscheidet sich lediglich durch die Zeitkonstante für die Abschaltung bzw. durch die Wartezeit, nach der die gewünschte Zwangsabschaltung ausgelöst wird.

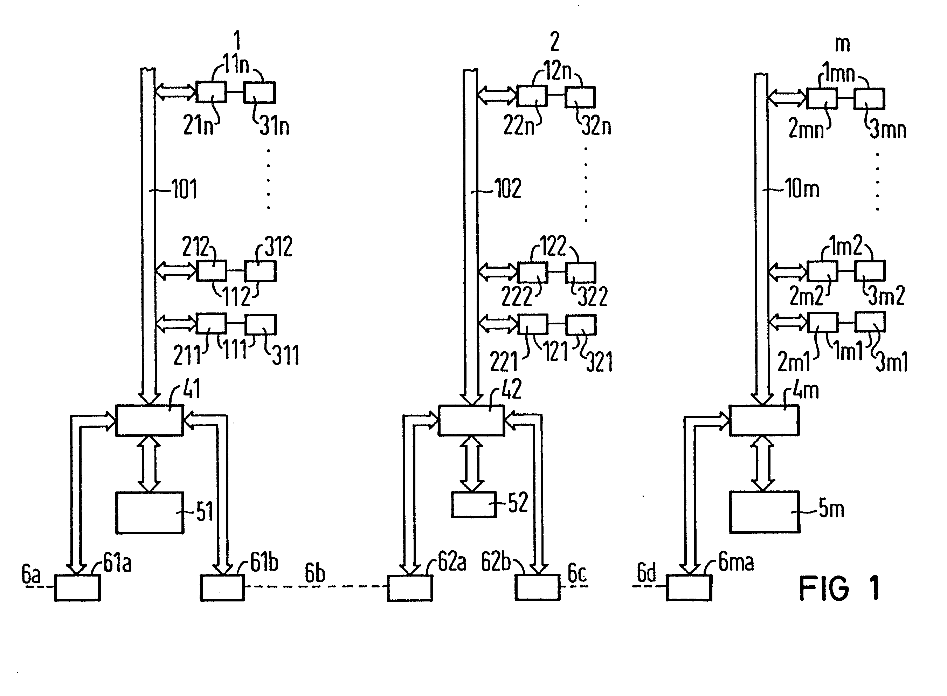

Bei der in Fig. 1 dargestellten Schaltungsanordnung ist in den Koppelvorrichtungen 41...4m eine Kontrollschaltung vorgesehen, mit der eine zum Datenbus 101...10m zugehörige Steuerleitung überwacht wird. Gegebenenfalls kann die Datenleitung selbst überwacht werden, insbesondere bei Bussystemen, in denen keine eigene Steuerleitung vorgesehen ist. Werden mehrere Datenbusse an eine Koppelvorrichtung angeschlossen, so wird zweckmäßigerweise je Datenbus eine eigene Kontrollschaltung vorgesehen.

Wird der Steuerbus von einer Schnittstellenanordnung 211...2mn länger als eine eingestellte Zeit $t_2$ belegt, so wird der Datenbus von der Koppelvorrichtung der Stationen 1,2 bzw. m und damit vom weiteren Datenübertragungsnetz abgetrennt.

Die Koppelvorrichtungen 41..4m sind in gleicher Weise aufgebaut. Fig. 3 zeigt als Beispiel den Aufbau der Koppelvorrichtung 41. Die Kontrollschaltung 9 ist zwischen dem Bus 101 und der Verteilerschaltung 40 angeordnet.

Der Bus 101 umfaßt einen Steuerbus 101a und einen Datenbus 101b. Der Steuerbus 101a ist an den Pegelwandler 97, z.B. vom Typ DS 88 LS 120 geführt. Der Ausgang des Pegelwandlers 97 ist unmittelbar an einen Eingang der NAND-Schaltung 94 und über den Inverter 93 an einen Eingang der UND-Schaltungen 92 und 95 geführt.

Der Ausgang 912 der Zeitschaltung 91 ist an je einen Eingang der UND-Schaltungen 92 und 95, der NAND-Schaltung 94 und der Anzeigevorrichtung 99 geführt.

Der Zeitbaustein 91 ist beispielsweise ein Timer vom Typ CD 45 41 und enthält einen Taktgeber, dessen Taktfrequenz durch eine äußere Beschaltung 91a bestimmt ist. Der Ausgang der NAND-Schaltung 94 ist unmittelbar an einen Steuereingang 981 des Schnittstellenbausteins 98 und über den Inverter 96 an den Steuereingang 402 der Verteilerschaltung 40 geführt. Der Schnittstellenbaustein 98 ist z.B. vom Typ SN 75 176. Der Ausgang des Schnittstellenbausteins 98 ist an den Datenbus 101 b geführt.

Überschreitet die Sendezeit einer an den Bus 101 angeschlossenen Teilnehmerschaltung 311...31n aufgrund eines Versagens der zugeordneten Kontrollschaltung 8 die Wartezeit der Kontrollschaltung 9, so geht der Logikpegel am Ausgang 912 der Zeitschaltung 91 von H auf L über und sperrt die UND-Schaltungen 92 und 95 sowie die NAND-Schaltung 94.

Durch das Sperren der UND-Schaltung 92 ergibt sich, daß die Zeitschaltung 91 über den Steuerbus 101a nicht gestartet werden kann und der Ausgang 912 im Zustand L verbleibt.

In diesem Zustand schaltet die NAND-Schaltung 94 unabhängig vom Pegel des Steuerbusses 101a auf Logikpegel H, so daß die Steuerleitungen 401, 402 der Verteilerschaltung 40 nicht durch den Bus 101 belegt sind. Gleichzeitig wird der Schnittstellenbaustein 98 an beiden Ausgängen in den hochohmigen Zustand gesteuert und somit der Datenbus 101b von Datenleitungen 403, 404 der Verteilerschaltung 40 abgetrennt.

Die Kontrollschaltung 9 ist zusammen mit der Verteilerschaltung 40 in der Koppelvorrichtung 41 untergebracht. Wird die Koppelvorrichtung 41 aus ihrer Aufnahmevorrichtung herausgezogen und wieder hineingesteckt, so wird die Zeitschaltung 91 zurückgesetzt, da der Automatik-Reset-Anschluß 913 auf Massepotential liegt. Dabei nimmt der Ausgang 912 Logikpegel H an, so daß der Ursprungszustand wieder hergestellt ist.

Sendet eine der an den Bus 101 angeschlossenen Teilnehmerschaltungen 311...31n ihre Daten über den Datenbus 101 b zur Koppelvorrichtung 41, so aktiviert sie vorher den Steuerbus 101a, wobei Logikpegel H am Ausgang des Pegelwandlers 97 entsteht. Dadurch gelangt über das NAND-Glied 94 Logikpegel L an den Steuereingang 981 des Schnittstellenbausteins 98 und der Empfänger im Schnittstellenbaustein 98 wird eingeschaltet. In diesem Schaltzustand ist der Datenbus 101b über die Datenleitung 404 und die Verteilerschaltung 40 der Koppelvorrichtung 41 zum Prozessor 51 und zu den Datenanschlußgeräten bzw. Modems 61a, 61b durchgeschaltet.

Gleichzeitig gelangt über den Inverter 93 und die UND-Schaltung 92 Logikpegel L an den Rücksetzeingang 911 der Zeitschaltung 91, so daß die Zeitschaltung 91 gestartet wird.

Überschreitet die Sendezeit einer Teilnehmerschaltung 311...31n die vorgesehene Wartezeit der Zeitschaltung 91, so nimmt der Ausgang 912 der Zeitschaltung 91 den Zustand L an. Dieser Logikpegel sperrt die UND-Schaltung 92, so daß sich die Zeitschaltung selbst hält. Gleichzeitig gelangt über die NAND-Schaltung 94 Logikpegel H an den Steuereingang 981 des Schnittstellenbausteins 98 und der Empfänger im Schnittstellenbaustein 98 wird gesperrt und der Steuereingang 402 der Verteilerschaltung 40 wird vom Steuerbus 101a abgetrennt. Zusätzlich wird durch die Dreifach-UND-Schaltung 95 der Steuerausgang 401 der Verteilerschaltung 40 abgetrennt und der zum Steuereingang 982 des Schnittstellenbausteins 98 führende Steuerleitung auf Logikpegel L gelegt und damit der Sender des Schnittstellenbausteins 98 an seinem Ausgang hochohmig geschaltet, so daß auf dem Datenbus 101b keine Datenkollision auftreten kann.

Über die Anzeigevorrichtung 99 wird das Ansprechen der Kontrollschaltung 9 angezeigt und über den Anschluß 991 ein Alarm gegeben.

Die Bemessung der Wartezeiten $t_2$ und $t_1$ derart, daß $t_2$ größer als $t_1$ ist, gewährleistet, daß die Kontrollschaltungen 9 der Koppelvorrichtungen 41...4m mit Sicherheit nicht ansprechen, so lange die Kontrollschaltungen 8 der Schnittstellenanordnungen 211...2mn intakt sind.

Die in den Figuren 1 bis 3 gezeigte Schaltungsanordnung zur seriellen Datenübertragung eignet sich besonders für ausgedehnte Datenübertragungsnetze, mit deren Hilfe von einer Vielzahl von Stationen Daten an einen als zentrale Steuer-und Auswerteeinrichtung dienenden Prozessor übertragen werden können. Bei einem bevorzugten Anwendungsfall befinden sich in einer Station jeweils eine Anzahl von Leitungsendgeräten von Nachrichtenübertragungseinrichtungen, die mit sogenannten Ortungsgeräten versehen sind. Die Ortungsgeräte enthalten jeweils einen Mikroprozessor, der Fehlermeldungen einer systemeigenen Überwachungseinrichtung auswertet und auf Abfrage an einen zentralen Prozessor abgibt.

Durch die zeitlich gestaffelte Zwangsabschaltung von defekten Ortungsgeräten bzw. Schnittstellenanordnungen mit defekter Kontrollschaltung wird erreicht, daß die Betriebszustandsmeldungen, Fehlermeldungen, Alarme usw. auch dann vom zentralen Prozessor erfaßt werden können, wenn in einem der Ortungsgeräte und/oder einer dem Ortungsgerät zugeordneten Kontrollschaltung ein Fehler aufgetreten ist, der zu einer Blockierung des Datenübertragungsnetzes führen könnte.

## Ansprüche

1. Schaltungsanordnung zur seriellen Datenübertragung zwischen mehreren Teilnehmerstellen (111...1mn) über wenigstens einen Bus (101...10m), wobei die Teilnehmerstellen jeweils eine Teilnehmerschaltung (311...3mn) und eine Schnittstellenanordnung (211...2mn) zur Ankopplung der Teilnehmerschaltung (311...3mn) an den Bus (101...10m) und jeweils eine eine Zeitschaltung (81) enthaltende Kontrollschaltung (8) aufweisen, mit deren Hilfe im Falle einer fehlerhaften Belegung des Busses (101...10m) durch die Teilnehmerschaltung (311...3mn) die Belegung nach Ablauf einer vorgegebenen Wartezeit aufhebbar ist, **dadurch gekennzeichnet,** daß der Bus (101...10m) an eine Koppelvorrichtung (41...4m) zur wahlweisen Ankopplung eines Busses an ein Datenübertragungsnetz geführt ist und daß die Koppelvorrichtung (41...4m) mit einer eine Zeitschaltung (91) enthaltenden Kontrollschaltung (9) versehen ist, mit deren Hilfe ein Abschaltsignal zur Aufhebung der Belegung des Datenübertragungsnetzes (6a...6d) durch den betreffenden Bus (101...10m) nach Ablauf einer vorgegebenen Wartezeit gebildet wird und daß die Wartezeit der der Koppelvorrichtung (41...4m) zugeordneten Kontrollschaltung (9) größer bemessen ist als die Wartezeit der den Teilnehmerstellen (111...1mn) zugeordneten Kontrollschaltungen (8).

2. Schaltungsanordnung nach Anspruch 1, **dadurch gekennzeichnet,** daß für den Fall, daß die Teilnehmerschaltungen in Impulsfolgen mit vorgegebener maximaler Dauer aussenden, die Kontrollschaltung derart ausgebildet ist, daß sie auf ein Überschreiten der vorgegebenen maximalen Dauer anspricht.

3. Schaltungsanordnung nach Anspruch 1 oder 2, **dadurch gekennzeichnet,** daß bei den den Teilnehmerstellen (111...1mn) zugeordneten Kontrollvorrichtungen (8) und/oder bei den den Koppelvorrichtungen (41...4m) zugeordneten Kontrollschaltungen (9) die jeweilige Zeitschaltung (81 ; 91) mit einer Anordnung (UND-Schaltung 82 ; 92) zur Selbsthaltung versehen ist.

4. Schaltungsanordnung nach Anspruch 3, **dadurch gekennzeichnet,** daß ein einem Rücksetzeingang (811 ; 911) der jeweiligen Zeitschaltung (81; 91) vorgeschaltete UND-Schaltung (82 ; 92) mit einem Eingang an eine Steuerleitung und mit einem weiteren Eingang an den Ausgang (812 ; 912) der jeweiligen Zeitschaltung (81 ; 91) angeschlossen ist.

5. Schaltungsanordnung nach einem der Ansprüche 1 bis 4, **dadurch gekennzeichnet,** daß die den Teilnehmerstellen (111...1mn) zugeordneten Kontrollschaltungen (8) und/oder die den Koppelvorrichtungen (41...4m) zugeordneten Kontrollschaltungen (9) mit einer an die jeweilige Kontrollschaltung (8 ; 9) angeschlossenen Anzeige- und/oder Alarmierungsvorrichtung (89 ; 99) versehen sind, die den Ansprechzustand der jeweiligen Kontrollschaltung (8; 9) anzeigt bzw. meldet.

6. Schaltungsanordnung nach einem der Ansprüche 1 bis 5, **dadurch gekennzeichnet,** daß die jeweilige Zeitschaltung (81 ; 91) derart ausgebildet und/oder beschaltet ist, daß sie bei vorübergehender Unterbrechung der Versorgungsspannung (+) zurückgesetzt wird.

7. Schaltungannordnung nach einem der Ansprüche 1 bis 6, **dadurch gekennzeichnet,** daß die jeweilige Zeitschaltung (81 ; 91) durch einen an einen Taktgeber angeschlossenen Zähler gebildet ist, dessen Ausgang (812 ; 912) an eine den Rücksetzeingang (811 ; 911) vorgeschaltete UND-Schaltung (82; 92) geführt ist.

8. Schaltungsanordnung nach einem der Ansprüche 1 bis 5, **dadurch gekennzeichnet,** daß der Ausgang der Kontrollschaltung (8) an eine dem Bus vorgeschaltete UND-Schaltung (84) geführt ist und daß der Bus (101) einen Datenbus (101b) und einen Steuerbus (101a) enthält und daß die Teilnehmerschaltung (311) über jeweils einen Schnittstellenbaustein (85 ; 86) an den Steuerbus (101a) bzw. an den Datenbus (101b) angeschlossen sind und daß Steuereingänge der Schnittstellenbausteine (85, 86) an die UND-Schaltung (84) angeschlossen sind (Fig. 2).

9. Schaltungsanordnung nach einem der Ansprüche 1 bis 8, **dadurch gekennzeichnet,** daß von einem an eine Koppelvorrichtung (41) angeschlossenen Bus (101) der Steuerbus (101a) über einen Pegelwandler (97) und eine an den Pegelwandler (97) und den Ausgang der Kontrollschaltung (9) angeschlossene Verknüpfungsschaltung (94) nach Art einer UND-Schaltung an einen Steuereingang (402) einer Verteilerschaltung (40) geführt ist und daß eine Dreifach-UND-Schaltung (95) vorgesehen ist, die mit je einem Eingang an den Ausgang der Kontrollschaltung (9), den Ausgang des Pegelwandlers (97) und einen Steuerausgang (401) der Verteilerschaltung (40) angeschlossen und mit ihrem Ausgang an einen Steuereingang (982) eines Schnittstellenbausteins (98) geführt ist, der mit seinem Sender und mit seinem Empfänger jeweils zwischen dem Datenbus (101b) und der Verteilerschaltung (40) angeordnet ist.

10. Schaltungsanordnung nach einem der vorhergehenden Ansprüche, **gekennzeichnet durch** eine Verwendung in einem Datenübertragungsnetz, mit dessen Hilfe von einer Vielzahl von Stationen nach einem Aufrufverfahren Daten an eine zentrale Steuer- und Auswerteeinrichtung übertragbar sind.

## Claims

1. Circuit arrangement for serial data transmission between a plurality of subscriber stations (111...1mn) via at least one bus (101...10m), the subscriber stations each having a subscriber circuit (311...3mn) and an interface arrangement (211...2mn) for coupling the subscriber circuit (311...3mn) to the bus (101...10m) and each having a control circuit (8) containing a time circuit (81), with the aid of which, in the event of an incorrect seizure of the bus (101...10m) by the subscriber circuit (311...3mn), the seizure can be cancelled after expiry of a predetermined waiting time, characterized in that the bus (101...10m) is connected to a coupling device (41...4m) for the optional coupling of a bus to a data transmission network, and in that the coupling device (41...4m) is provided with a control circuit (9) containing a time circuit (91), with the aid of which a switch-off signal for cancelling the seizure of the data transmission network (6a...6d) by the respective bus (101...10m) is formed after expiry of a predetermined waiting time, and in that the waiting time of the control circuit (9) associated with the coupling device (41...4m) is dimensioned to be greater than the waiting time of the control circuits (8) associated with the subscriber stations (111...1mn).

2. Circuit arrangement according to Claim 1, characterized in that, in the event that the subscriber circuits transmit pulse trains of a predetermined maximum duration, the control circuit is designed in such a way that it responds to an exceeding of the predetermined maximum duration.

3. Circuit arrangement according to Claim 1 or 2, characterized in that, in the control devices (8) associated with the subscriber stations (111...1mn) and/or in the control circuits (9) associated with the coupling devices (41...4m), the respective time circuit (81 ; 91) is provided with an arrangement (AND circuit 82 ; 92) for self-holding.

4. Circuit arrangement according to Claim 3, characterized in that an AND circuit (82 ; 92) connected upstream of a reset input (811 ; 911) of the respective time circuit (81 ; 91) is connected with one input to a control line and with a further input to the output (812 ; 912) of the respective time circuit (81 ; 91).

5. Circuit arrangement according to one of Claims 1 to 4, characterized in that the control circuits (8) associated with the subscriber stations (111...1mn) and/or the control circuits (9) associated with the coupling devices (41...4m) are provided with a display device and/or alarm device (89 ; 99) which is connected to the respective control circuit (8 ; 9) and which displays or reports the response state of the respective control circuit (8 ; 9).

6. Circuit arrangement according to one of Claims 1 to 5, characterized in that the respective time circuit (81 ; 91) is designed and/or wired in such a way that it is reset in the event of a temporary interruption of the supply voltage (+).

7. Circuit arrangement according to one of Claims 1 to 6, characterized in that the respective time circuit (81 ; 91) is formed by a counter which is connected to a clock generator and the output of which (812 ; 912) is fed to an AND circuit (82 ; 92) connected upstream of the reset input (811 ; 911).

8. Circuit arrangement according to one of Claims 1 to 5, characterized in that the output of the control circuit (8) is fed to an AND circuit (84) connected upstream of the bus, and in that the bus (101) contains a data bus (101b) and a control bus (101a), and in that the subscriber circuit (311) is connected to the control bus (101a) and to the data bus (101b), respectively, via an interface module (85 ; 86) in each case, and in that the control inputs of the interface modules (85, 86) are connected to the AND circuit (84) (Fig. 2).

9. Circuit arrangement according to one of Claims 1 to 8, characterized in that the control bus (101a) is led from a bus (101) connected to a coupling device (41) via a level converter (97) and a logic circuit (94), in the manner of an AND circuit, connected to the level converter (97) and the output of the control circuit (9) to a control input (402) of a distributor circuit (40), and in that a triple AND circuit (95) is provided which is connected with one input each to the output of the control circuit (9), the output of the level converter (97) and a control output (401) of the distributor circuit (40), and is connected with its output to a control input (982) of an interface module (98) which is arranged with its transmitter and with its receiver in each case between the data bus (101b) and the distributor circuit (40).

10. Circuit arrangement according to one of the preceding claims, characterized by use in a data transmission network, with the aid of which data can be transmitted from a plurality of stations according to a call-up procedure to a central control and evaluation device.

## Revendications

1. Montage pour la transmission serielle de données entre plusieurs postes d'abonnés (111...1mn) par l'intermédiaire d'au moins un bus (101...10m), du type dans lequel les postes d'abonnés comportent chacun un circuit d'abonné (311...3mn) et un circuit d'interface (211...2mn) pose le couplage du circuit d'abonné (311...3mn) au bus (101...10m) et chacun un circuit de contrôle (8) qui comporte un circuit de temporisation (81) à l'aide duquel, dans le cas d'une occupation erronnée du bus (101...10m) par le circuit d'abonné (311...3mn) l'occupation, après l'écoulement d'une durée d'attente prédéterminée est susceptible d'être supprimée, caractérisé par le fait sur le bus (101...10m) est relié à un dispositif de couplage (41...4m) pour le couplage, au choix, d'un bus à un réseau de transmission de données, et que le dispositif de couplage (41...4m) est pourvu d'un circuit de contrôle (9) comportant un circuit de temporisation (91), à l'aide duquel est formé un signal de branchement pour supprimer l'occupation du réseau de transmission de données (6a...6d) par le bus concerné 101...10m), après une durée d'attente prédéterminée, et que la durée d'attente du circuit de contrôle (9) qui est associé au dispositif du couplage (41...4m), est plus longue que la durée d'attente des circuits de contrôle qui sont associés aux postes d'abonnés (111...1mn).

2. Montage selon la revendication 1, caractérisé par le fait que pour le cas où les circuits d'abonnés émettent des trains d'impulsions d'une durée maximale prédéterminée, le circuit de contrôle est réalisé de telle façon qu'il répond à un dépassement de la durée maximale prédéterminée.

3. Montage selon la revendication 1 ou 2, caractérisé par le fait que dans le cas de dispositifs de contrôle (8) qui sont associés aux postes d'abonnés 111...1 mn) et/ou dans le cas de circuits de contrôle qui sont associés aux dispositifs de couplage (41 ...4m), le circuit de temporisation concerné (81 ; 91) est pourvu d'un dispositif (circuit ET 82 ; 92) servant au maintien automatique.

4. Montage selon la revendication 3, caractérisé par le fait qu'un circuit (ET 82 ;92) qui est prévu en amont d'une entrée de remise à l'état initial (811 ; 911) du circuit de temporisation concerné (81 ; 91), est relié par une entrée à un conducteur de commande, et par une seconde entrée à la sortie (812 ; 912) du circuit de temporisation concerné (81 ; 91).

5. Montage selon l'une des revendications 1 à 4, caractérisé par le fait que les circuits de contrôle (8) qui sont associés au poste d'abonné (111...1mn) et/ou les circuits de contrôle (9), qui sont associés aux dispositifs de couplage (41 ...4m) sont reliés à un dispositif d'affichage et/ou d'alarme (89 ; 99) qui sont reliés au circuit de contrôle concerné (8 ; 9), et qui indique ou signale l'état d'accessibilité du circuit de contrôle concerné (8 ; 9).

6. Montage selon l'une des revendications 1 à 5, caractérisé par le fait que le circuit de temporisation concerné (81 ; 91) est réalisé de telle façon et/ou comporte un circuit tel que, dans le cas d'une interruption passagère, il rétablit la tension d'alimentation (+).

7. Montage selon l'une des revendications 1 à 6, caractérisé par le fait que le circuit de temporisation concerné (81 ; 91) est formé par un compteur qui est relié à un générateur de cadence, dont la sortie (812; 912) est relié à un circuit ET (82 ; 92) monté en amont de l'entrée de remise à l'état initial (811 ; 911).

8. Montage selon l'une des revendications 1 à 5, caractérisé par le fait que la sortie du circuit de contrôle (8) est reliée à un circuit ET (84) monté en amont du bus et que le bus (101) comporte un bus de données (101 b) et un bus de commande (101 a), et que le circuit d'abonné (311) est relié, par respectivement un module d'interface (85 ; 86), au bus de commande (101 a) ou au bus de données (101 b), et que les entrées de commande des modules d'interface (85 ; 86) sont reliés au circuit ET (84).

9. Montage selon l'une des revendications 1 à 8, caractérisé par le fait qu'à partir d'un bus (101) qui est relié à un dispositif de couplage (41), le bus de commande (101 a) est relié, par l'intermédiaire d'un convertisseur de niveau (97) et d'un circuit logique (94) du genre d'un circuit ET qui est relié au convertisseur de niveau (97) et à la sortie du circuit de contrôle (9), à une entrée de commande (402) d'un circuit de répartition (40), et qu'un triple circuit ET (95) est prévu, qui est relié par respectivement une entrée à la sortie du circuit de contrôle (9), à la sortie du convertisseur de niveau (97) et à une sortie de commande (401) du circuit de répartition (40) et, par sa sortie, à une entrée de commande (982) de module d'interface (98) qui, avec son émetteur et avec son récepteur est disposé respectivement entre le bus de données (101 b) et le circuit de répartition (40).

10. Montage selon l'une des revendications précédentes, caractérisé par la mise en oeuvre, dans un réseau de transmission de données à l'aide duquel, à partir d'une multiplicité de postes et selon un procédé d'appel, des données sont susceptibles d'être transmises à un dispositif central de commande et d'évaluation.

FIG 1

EP 0 255 069 B1

# FIG 2

# FIG 3